# EUROPÄISCHE PATENTANMELDUNG

(11) **EP 3 399 840 A1**
(43) Veröffentlichungstag der Anmeldung: **07.11.2018**
(21) Anmeldenummer: 18165703.2
(22) Anmeldetag: 04.04.2018
(51) Int. Cl.: H05B 33/08

(54) **STEUERN VON WENIGSTENS EINEM LEUCHTMITTEL EINES FAHRZEUGSCHEINWERFERS ABHÄNGIG VON EINER AN EINEM FAHRZEUGSCHEINWERFERANSCHLUSS EINES FAHRZEUGS BEREITSTELLBAREN ELEKTRISCHEN GRÖSSE**

(30) Priorität: 02.05.2017 DE 102017207346
(71) Anmelder: OSRAM GmbH, 80807 München (DE)
(72) Erfinder: Kreisz, Benjamin, 89542 Herbrechtingen (DE); Maresch, Manuel, 89547 Heuchlingen (DE); Nasrallah-Goldberg, Sammr, 81929 München (DE); Schwenkbeck, Marc, 71364 Winnenden (DE)

(57) **Zusammenfassung**

Die Erfindung betrifft ein Verfahren zum elektrischen Steuern von wenigstens einem Leuchtmittel (12) eines Fahrzeugscheinwerfers (14).

Der Erfindung liegt die Aufgabe zugrunde, die Flexibilität hinsichtlich eines an einem Fahrzeugscheinwerferanschluss (16) anschließbaren Fahrzeugscheinwerfers (14) zu verbessern.

Erfindungsgemäß wird das wenigstens eine Leuchtmittel (12) abhängig von einer am Fahrzeugscheinwerferanschluss (16) des Fahrzeugs (18) bereitgestellten elektrischen Größe mittels eines mit einem Bordnetz (26) eines Fahrzeugs (18) elektrisch gekoppelten Anschlussgerätes (10) gesteuert, wobei
- die elektrische Größe erfasst und ein vorgegebenes Leuchtmittel unter Berücksichtigung der erfassten elektrischen Größe am Fahrzeugscheinwerferanschluss (16) simuliert wird, und
- ein Steuersignal abhängig von der erfassten elektrischen Größe ermittelt und das wenigstens eine Leuchtmittel (12) abhängig von dem ermittelten Steuersignal gesteuert wird.

## Beschreibung

Die Erfindung betrifft ein Anschlussgerät zum elektrischen Steuern von wenigstens einem Leuchtmittel eines Fahrzeugscheinwerfers abhängig von einer an einem Fahrzeugscheinwerferanschluss eines Fahrzeugs bereitstellbaren elektrischen Größe. Darüber hinaus betrifft die Erfindung einen Fahrzeugscheinwerfer zum Anschließen an einen Fahrzeugscheinwerferanschluss eines Fahrzeugs. Weiterhin betrifft die Erfindung ein Fahrzeug mit einem an einem Fahrzeugscheinwerferanschluss des Fahrzeugs angeschlossenen Fahrzeugscheinwerfer und einem Bordnetz. Schließlich betrifft die Erfindung auch ein Verfahren zum elektrischen Steuern von wenigstens einem Leuchtmittel eines Fahrzeugscheinwerfers mittels eines mit einem Bordnetz eines Fahrzeugs elektrisch gekoppelten Anschlussgerätes, bei dem das wenigstens eine Leuchtmittel abhängig von einer an dem Fahrzeugscheinwerferanschluss des Fahrzeugs bereitgestellten elektrischen Größe gesteuert wird.

Anschlussgeräte, Fahrzeugscheinwerfer, Fahrzeuge sowie Verfahren zum Steuern von Fahrzeugscheinwerfern sind dem Grunde nach im Stand der Technik umfänglich bekannt, sodass es eines gesonderten druckschriftlichen Nachweises hierfür nicht bedarf. Moderne Fahrzeuge verfügen über eine fahrzeugseitige Überwachungseinrichtung, die eine Funktionalität eines angeschlossenen Fahrzeugscheinwerfers, insbesondere von dessen Leuchtmittel, während des bestimmungsgemäßen Betriebs des Fahrzeugs überwacht. Eine solche Überwachungsfunktion ist zum Teil auch durch die Normung, beispielsweise wie ECE R 48 oder dergleichen, vorgeschrieben. Hierdurch wird erreicht, dass einerseits ein Fahrzeugführer über die Funktionalität des jeweiligen Fahrzeugscheinwerfers beziehungsweise seines Leuchtmittels informiert und bei Störungen entsprechende Maßnahmen einleiten kann. Darüber hinaus kann erreicht werden, dass nicht bestimmungsgemäß betreibbare Fahrzeugscheinwerfer beziehungsweise deren Leuchtmittel eine Meldung verursachen, die automatisch weitere Maßnahmen bewirken kann, beispielsweise Abschalten eines dem jeweiligen Leuchtmittel zugeordneten Leuchtmittelkanals, um zum Beispiel gefährliche Zustände oder dergleichen vermeiden zu können.

Üblicherweise ist die fahrzeugseitige Überwachungseinrichtung für die Überwachung eines zugeordneten Leuchtmittels angepasst ausgebildet. Tritt ein Defekt eines solchen Leuchtmittels während des bestimmungsgemäßen Betriebs ein, kann im Rahmen einer Reparatur beziehungsweise Wartung nur ein baugleiches Leuchtmittel eingesetzt werden. Wird hingegen ein Leuchtmittel mit abweichenden, insbesondere elektrischen, Eigenschaften eingesetzt, kann dies aufgrund unterschiedlicher elektrischer Eigenschaften von der Überwachungseinrichtung als Fehler erfasst und eine entsprechende Störungsmeldung beziehungsweise ein entsprechendes Störungssignal abgegeben werden. Darüber hinaus kann im ungünstigsten Fall der entsprechende Leuchtmittelkanal sogar vollständig abgeschaltet werden, wenn dies fahrzeugseitig vorgesehen ist. Obwohl das Leuchtmittel intakt ist, kann die bestimmungsgemäße Beleuchtungsfunktion deshalb nicht zur Verfügung gestellt werden.

Auch im Falle einer Umrüstung bezüglich eines Fahrzeugscheinwerfers kann ein derartiges Problem auftreten. Ist beispielsweise die Überwachungseinrichtung für die Funktionalität einer Glühlampe als Leuchtmittel ausgebildet, kann ein Anschließen eines leuchtdiodenbasierten Leuchtmittels, insbesondere mit und ohne Leuchtstoffkonversion, und/oder eines laserdiodenbasierten Leuchtmittels, welches mit einem Wellenlängenumwandlungselement, zum Beispiel in Form einer Laser-Activated-Remote-Phosphor (LARP) Lichtquelle ausgestattet ist, aufgrund unterschiedlicher elektrischer Eigenschaften dazu führen, dass die Überwachungseinrichtung ein fehlerhaftes Leuchtmittel ermittelt und entsprechende Meldungen und Funktionen veranlasst, obwohl das leuchtdiodenbasierte und/oder das laserdiodenbasierte Leuchtmittel die bestimmungsgemäße Beleuchtungsfunktion bereitzustellen vermag. Dasselbe gilt in analoger Weise auch für einen Fahrzeugscheinwerfer, welcher mit einer Entladungslampe als Leuchtmittel ausgestattet ist.

Natürlich wäre es möglich, die Überwachungseinrichtung des Fahrzeugs entsprechend anzupassen. Häufig ist dies jedoch nur mit erheblichem Aufwand möglich. Darüber hinaus erfordert dies einen fahrzeugseitigen Eingriff, insbesondere in die Überwachungseinrichtung, der darüber hinaus gewährleistungstechnische Risiken birgt. Ein Eingriff in die Überwachungseinrichtung ist deshalb möglichst zu vermeiden, selbst wenn er mit angemessenem Aufwand realisierbar wäre.

Die Erfindung befasst sich mit der Problematik, eine Möglichkeit zu schaffen, Fahrzeugscheinwerfer mit unterschiedlichsten Leuchtmitteln an den Betrieb an einem vorgegebenen Fahrzeugscheinwerferanschluss des Fahrzeugs anschließen zu können, ohne in die fahrzeugseitige Steuerung, insbesondere in die Überwachungseinrichtung, eingreifen zu müssen.

Der Erfindung liegt demnach die Aufgabe zugrunde, die Flexibilität hinsichtlich eines am Fahrzeugscheinwerferanschluss anschließbaren Fahrzeugscheinwerfers zu verbessern.

Als Lösung werden mit der Erfindung ein Anschlussgerät, ein Fahrzeugscheinwerfer, ein Fahrzeug sowie ein Verfahren gemäß den unabhängigen Ansprüchen vorgeschlagen.

Vorteilhafte Ausgestaltungen ergeben sich anhand von Merkmalen der abhängigen Ansprüche.

Bezüglich eines gattungsgemäßen Anschlussgerätes wird insbesondere vorgeschlagen, dass dieses einen Fahrzeuganschluss zum Anschließen am Fahrzeugscheinwerferanschluss des Fahrzeugs, einen Leuchtmittelanschluss zum elektrischen Koppeln des wenigstens einen Leuchtmittels des Fahrzeugscheinwerfers, einen Bordnetzanschluss zum Anschließen an ein elektrisches Bordnetz des Fahrzeugs, eine am Fahrzeuganschluss und am Bordnetzanschluss angeschlossene Leuchtmittelsimulationseinheit zum Erfassen der elektrischen Größe und zum Simulieren eines vorgebbaren Leuchtmittels unter Berücksichtigung der erfassten elektrischen Größe am Fahrzeuganschluss und eine am Leuchtmittelanschluss und am Bordnetzanschluss angeschlossene Steuereinheit zum Ermitteln eines Steuersignals abhängig von der erfassten elektrischen Größe und zum Steuern des Leuchtmittels abhängig von dem ermittelten Steuersignal aufweist.

Bezüglich eines gattungsgemäßen Fahrzeugscheinwerfers wird insbesondere vorgeschlagen, dass dieser ein Anschlussgerät gemäß der Erfindung aufweist.

Bezüglich eines gattungsgemäßen Fahrzeugs wird insbesondere vorgeschlagen, dass der Fahrzeugscheinwerfer mittels eines Anschlussgerätes gemäß der Erfindung angeschlossen oder der Fahrzeugscheinwerfer gemäß der Erfindung ausgebildet ist.

Verfahrensseitig wird insbesondere vorgeschlagen, dass die elektrische Größe erfasst und ein vorgegebenes Leuchtmittel unter Berücksichtigung der erfassten elektrischen Größe am Fahrzeugscheinwerferanschluss simuliert wird, und ein Steuersignal abhängig von der erfassten elektrischen Größe ermittelt und das wenigstens eine Leuchtmittel abhängig von dem ermittelten Steuersignal gesteuert wird.

Fahrzeuge, insbesondere für den Straßenverkehr, sind in der Regel Kraftfahrzeuge, beispielsweise Kraftwagen oder dergleichen. Das Fahrzeug kann aber auch ein Anhänger oder ein Fahrzeugzug bestehend aus einem Zugfahrzeug, welches üblicherweise ein Kraftfahrzeug ist, und einem oder mehrere Anhänger sein. Bei einem Fahrzeugzug sind das Zugfahrzeug und der Anhänger miteinander gekoppelt. In diesem Sinne kann ein Fahrzeugzug auch ein von einem Zugfahrzeug gezogener Anhänger sein, an dem ein weiterer Anhänger angekoppelt ist.

Fahrzeuge dieser Art benötigen eine Fahrzeugbeleuchtung, die zum Teil durch gesetzliche Vorschriften bestimmt ist. Dadurch soll unter anderem eine ordnungsgemäße Beleuchtung des Fahrzeugs erreicht werden, was beispielsweise einen bestimmungsgemäßen Betrieb von entsprechenden Fahrzeugscheinwerfern erfordert. Die Fahrzeugscheinwerfer sind zu diesem Zweck an Scheinwerferanschlüssen des Fahrzeugs angeschlossen. Über diese Fahrzeuganschlüsse werden die Leuchtmittel der Fahrzeugscheinwerfer in der Regel durch die fahrzeugseitige Steuerungseinrichtung in bestimmungsgemäßer Weise mit elektrischer Leistung beaufschlagt, sodass die Leuchtmittel in vorgegebener Weise Licht abgeben. Dadurch kann die bestimmungsgemäße Beleuchtungsfunktion des Fahrzeugs erreicht werden. Die Steuereinrichtung des Fahrzeugs umfasst - wie zuvor bereits erläutert - in der Regel die an das jeweilige Leuchtmittel angepasste Überwachungseinrichtung, mittels der das jeweilige Leuchtmittel des jeweiligen Fahrzeugscheinwerfers hinsichtlich seines bestimmungsgemäßen Betriebs überwacht werden kann.

Mittels der Erfindung ist es nunmehr möglich, am Fahrzeuganschluss, der mit dem fahrzeugseitigen Fahrzeugscheinwerferanschluss elektrisch gekoppelt ist, die Funktion des jeweiligen Leuchtmittels zu simulieren und dadurch einen bestimmungsgemäßen Betrieb bezüglich der Überwachungseinrichtung des Fahrzeugs zu simulieren. Dadurch ist es möglich, ein abweichendes Leuchtmittel, als es überwachungseinrichtungsseitig vorgesehen ist, in bestimmungsgemäßer Weise zu betreiben. Die Erfindung ermöglicht es somit, eine Anpassung diesbezüglich vorzunehmen.

Dabei kann aus der elektrischen Größe, die am Fahrzeugscheinwerferanschluss bereitgestellt wird, ein jeweiliger Funktionszustand des vorgegebenen Leuchtmittels ermittelt werden und die Simulation mittels der Leuchtmittelsimulationseinheit entsprechend angepasst werden, sodass seitens der Steuerungseinrichtung des Fahrzeugs beziehungsweise deren Überwachungseinrichtung ein ordnungsgemäß funktionstüchtiges Leuchtmittel erkannt wird. Aus der erfassten elektrischen Größe wird sodann das Steuersignal ermittelt, welches dazu dient, die Steuereinheit zu betreiben. Die Steuereinheit dient dazu, das Leuchtmittel des Fahrzeugscheinwerfers im Sinne der Steuereinrichtung des Fahrzeugs zu steuern.

Das vorgebbare Leuchtmittel ist somit ein Leuchtmittel, auf dessen Funktionalität die Überwachungseinrichtung des Fahrzeugs angepasst ist. Das Leuchtmittel des Fahrzeugscheinwerfers kann dagegen hiervon abweichen. Durch die Erfindung ist nämlich diesbezüglich eine Entkopplung gegeben, sodass es auf die tatsächlichen elektrischen Eigenschaften des Leuchtmittels des Fahrzeugscheinwerfers nicht weiter ankommt.

Als elektrische Größe kommt dem Grunde nach ein elektrischer Strom, eine elektrische Spannung, eine elektrische Leistung, aber auch zum Beispiel zeitlich variierende elektrische Größen, insbesondere ein getakteter elektrischer Strom, eine getaktete elektrische Spannung und/oder dergleichen in Betracht. Ist zum Beispiel die elektrische Größe eine elektrische Spannung, die von der Steuereinrichtung des Fahrzeugs beziehungsweise deren Überwachungseinrichtung bereitgestellt wird, kann mittels der Leuchtmittelsimulationseinheit ein entsprechender elektrischer Strom am Fahrzeuganschluss gezogen werden, der dem bestimmungsgemäßen Betrieb des vorgegebenen Leuchtmittels entsprechen würde. Dadurch wird der vorgelagerten Überwachungseinrichtung des Fahrzeugs simuliert, dass ein funktionstüchtiges bestimmungsgemäßes Leuchtmittel vorhanden ist.

Damit die dem Fahrzeugscheinwerferanschluss entnommene elektrische Energie mittels der Leuchtmittelsimulationseinheit auch tatsächlich entnommen werden kann, ist die Leuchtmittelsimulationseinheit an den Bordnetzanschluss angeschlossen. Die elektrische Energie beziehungsweise die elektrische Leistung, die dem Fahrzeugscheinwerferanschluss entnommen wird, kann an den Bordnetzanschluss abgeführt werden, der zu diesem Zweck an das elektrische Bordnetz des Fahrzeugs angeschlossen ist. Vorzugsweise umfasst das elektrische Bordnetz des Fahrzeugs einen elektrischen Energiespeicher wie einem Akkumulator oder dergleichen, der in der Lage ist, die zugeführte elektrische Energie aufzunehmen. Die Erfindung ermöglicht es somit, den Fahrzeugscheinwerferanschluss unabhängig von dem tatsächlich im Fahrzeugscheinwerfer vorhandenen Leuchtmittel zu betreiben beziehungsweise zu belasten.

Um das tatsächlich im Fahrzeugscheinwerfer vorhandene Leuchtmittel in geeigneter Weise betreiben zu können, ist die Steuereinheit vorgesehen. Diese ermittelt aus der von der Leuchtmittelsimulationseinheit erfassten elektrischen Größe ein Steuersignal, welches zum Steuern des Leuchtmittels herangezogen wird. Zu diesem Zweck ist die Steuereinheit kommunikationstechnisch mit der Leuchtmittelsimulationseinheit gekoppelt. Die Steuereinheit ist zu ihrem bestimmungsgemäßen Zweck ebenfalls am Bordnetzanschluss angeschlossen, damit sie vom Bordnetzanschluss die für den bestimmungsgemäßen Betrieb erforderliche elektrische Energie beziehungsweise elektrische Leistung beziehen kann. Die Steuereinheit weist entsprechende elektrische Stellmittel auf, mit denen das Leuchtmittel des Fahrzeugscheinwerfers gemäß dem Steuersignal gesteuert werden kann. Dadurch kann eine Energieversorgung des Leuchtmittels unabhängig von einer Beanspruchung des Fahrzeugscheinwerferanschlusses erfolgen. Natürlich besteht die Möglichkeit, dass zumindest ein Teil der von der Leuchtmittelsimulationseinheit an den Bordnetzanschluss gelieferten elektrischen Energie beziehungsweise elektrischen Leistung für den Betrieb des Leuchtmittels des Fahrzeugscheinwerfers genutzt wird.

Das Leuchtmittel hat vorzugsweise einen geringeren Energiebedarf beziehungsweise einen geringeren Leistungsbedarf als das vorgebbare Leuchtmittel, auf das die Überwachungseinrichtung des Fahrzeugs eingestellt ist. Darüber hinaus kann natürlich auch vorgesehen sein, dass das Leuchtmittel des Fahrzeugscheinwerfers einen größeren Energiebedarf beziehungsweise einen größeren Leistungsbedarf als das vorgegebene Leuchtmittel aufweist. Die Erfindung ermöglicht es, hier in einem weiten Bereich einen Konstruktionsfreiraum zu schaffen, der es ermöglicht, dass unterschiedlichste Scheinwerferkonstruktionen mit unterschiedlichsten Leuchtmitteln betrieben werden können, ohne dass in die fahrzeugseitige Steuereinrichtung beziehungsweise deren Überwachungseinrichtung eingegriffen zu werden braucht. Die Ausgestaltung gemäß der Erfindung ermöglicht es also, in bereits vorhandene Fahrzeugkonstruktionen unterschiedlichste Scheinwerferkonstruktionen mit unterschiedlichsten Leuchtmitteln auch nachträglich integrieren zu können. Dadurch eignet sich die Erfindung insbesondere für den Bereich der Nachrüstung beziehungsweise Umrüstung von bereits vorhandenen Fahrzeugen.

Der Fahrzeugscheinwerfer kann ein Frontscheinwerfer, ein Rückscheinwerfer, ein Seitenscheinwerfer oder dergleichen sein. Natürlich sind auch Kombinationsgestaltungen möglich. Der Scheinwerfer umfasst wenigstens ein Leuchtmittel, kann darüber hinaus jedoch auch zwei oder mehrere Leuchtmittel umfassen.

Die Leuchtmittel können unterschiedlichen Typs sein. Ein Leuchtmittel kann zum Beispiel eine Glühlampe, eine oder mehrere Leuchtdioden (LED), eine LARP-Lichtquelle, eine Gasentladungslampe, einen Laserscanner, eine OLED, ein LED-Matrix-Licht, eine LED-Retrofit-Lampe, beispielsweise eine OSRAM XLS LED-Lampe, Kombinationen hiervon oder dergleichen aufweisen. Umfasst der Fahrzeugscheinwerfer mehr als ein Leuchtmittel, können die Leuchtmittel für unterschiedliche bestimmungsgemäße Funktionen der Beleuchtung vorgesehen sein, so zum Beispiel für eine Fahrlichtfunktion wie Abblendlicht, Fernlicht und/oder dergleichen sowie auch eine Signalfunktion wie ein Blinkerlicht, ein Bremslicht und/oder dergleichen.

Ein häufiger Anwendungsfall für die Erfindung ist, wenn die Überwachungseinrichtung des Fahrzeugs für den Betrieb von Glühlampen wie Halogenlampen oder dergleichen ausgebildet ist und der Fahrzeugscheinwerfer als Leuchtmittel eine leuchtdiodenbasierte Lichtquelle aufweist. Bekanntlich braucht die leuchtdiodenbasierte Lichtquelle im Vergleich zur Glühlampe für die gleiche Lichtleistung eine erheblich geringere elektrische Energie beziehungsweise elektrische Leistung. Daher würde ein unmittelbarer Anschluss eines solchen Leuchtmittels an den Fahrzeugscheinwerferanschluss dazu führen, dass die Überwachungseinrichtung des Fahrzeugs eine zu geringe Leistung feststellt und deshalb eine Fehlermeldung abgibt. Im ungünstigsten Fall kann vorgesehen sein, dass die Überwachungseinrichtung den Fahrzeugscheinwerferanschluss vollständig deaktiviert, obwohl ein funktionstüchtiger Fahrzeugscheinwerfer angeschlossen ist. Mit der Erfindung kann eine entsprechende Anpassung erreicht werden, sodass ohne Eingriff in die fahrzeugseitige Steuereinrichtung beziehungsweise Überwachungseinrichtung eine zuverlässige bestimmungsgemäße Funktion realisiert werden kann.

Der Fahrzeugscheinwerferanschluss umfasst zumindest eine elektrische Verbindung, die nach Art einer Steckverbindung ausgebildet sein kann. Dies erlaubt es auf einfache Weise, den Fahrzeugscheinwerfer vom Fahrzeug zu trennen, beispielsweise wenn er aufgrund einer Beschädigung ausgetauscht werden muss, ein defektes Leuchtmittel auszutauschen ist oder dergleichen. Entsprechend ist der Fahrzeuganschluss des Anschlussgeräts ausgebildet. Mit dem Fahrzeuganschluss, der als entsprechende Steckverbindung ausgebildet sein kann, kann eine zuverlässige elektrische Verbindung des Anschlussgeräts mit dem Fahrzeug beziehungsweise seinem Bordnetz erreicht werden.

Besonders vorteilhaft ist die Steuereinrichtung ausgebildet, die bestimmungsgemäße Funktion des Leuchtmittels zu überwachen. Vorzugsweise stellt die Steuereinheit hierfür die gleiche Überwachungsfunktionalität wie die Überwachungseinrichtung des Fahrzeugs bereit. Entsprechend der Überwachung kann die Steuereinheit ein entsprechendes Überwachungssignal bereitstellen. Das Überwachungssignal kann an die fahrzeugseitige Überwachungseinrichtung beziehungsweise Steuereinrichtung übermittelt werden. Besonders vorteilhaft kann jedoch vorgesehen sein, dass das Überwachungssignal an die Leuchtmittelsimulationseinheit übermittelt wird, welche die Simulation des vorgegebenen Leuchtmittels abhängig von dem Überwachungssignal durchführt. So kann vorgesehen sein, dass beispielsweise bei einem Ermitteln einer elektrischen Unterbrechung des Leuchtmittels durch die Steuereinheit ein entsprechendes Überwachungssignal an die Leuchtmittelsimulationseinheit übermittelt wird, welche sodann die Stromentnahme aus dem Fahrzeugscheinwerferanschluss des Fahrzeugs abschaltet. Dadurch erhält die Überwachungseinrichtung des Fahrzeugs die Möglichkeit, diesen Fehler entsprechend festzustellen und eine entsprechende Meldung beziehungsweise weitere Aktivitäten zu veranlassen. Das Anschlussgerät der Erfindung funktioniert in diesem Sinne somit bidirektional, sodass das Leuchtmittel des Fahrzeugscheinwerfers nicht nur gemäß der am Fahrzeugscheinwerferanschluss vorhandenen elektrischen Größe gesteuert wird, sondern auch entsprechende Fehlerfunktionen, die am Leuchtmittel auftreten, entsprechend am Fahrzeugscheinwerferanschluss des Fahrzeugs simuliert werden. Dadurch braucht eine separate Kommunikationsverbindung zur Übermittlung des Funktionszustands des Leuchtmittels nicht mehr vorgesehen zu werden.

Vorzugsweise ist am Fahrzeuganschluss des Anschlussgerätes die Leuchtmittelsimulationseinheit ausschließlich angeschlossen. Die dem Fahrzeugscheinwerferanschluss entnommene elektrische Energie beziehungsweise elektrische Leistung wird somit vollständig der Leuchtmittelsimulationseinheit zugeführt beziehungsweise von dieser aufgenommen und weiter verarbeitet. Der Fahrzeugscheinwerferanschluss kann somit im Wesentlichen vorzugsweise unabhängig von weiteren Verbrauchern beziehungsweise Einheiten durch die Leuchtmittelsimulationseinheit beaufschlagt werden. Dies ermöglicht eine besonders zuverlässige Funktionalität und ermöglicht es darüber hinaus auf einfache Weise auch vorzugsweise sämtliche Fehlerfunktionen, die mittels der Überwachungseinrichtung des Fahrzeugs erfasst werden können, im Wesentlichen ungestört bereitzustellen. Insbesondere ist keine unmittelbare Energieversorgung des Leuchtmittels des Fahrzeugscheinwerfers aus dem Fahrzeuganschluss vorgesehen.

Je nach Bedarf kann auch der Leuchtmittelanschluss als elektrische, vorzugsweise lösbare, Verbindung ausgebildet sein, die mit dem Leuchtmittel des Fahrzeugscheinwerfers in geeigneter Weise elektrisch gekoppelt sein kann. Vorzugsweise ist die elektrische Verbindung ebenfalls als Steckverbindung ausgebildet. Ist das Anschlussgerät jedoch im Fahrzeugscheinwerfer integriert angeordnet, kann die elektrische Verbindung auch durch eine feste elektrische Verdrahtung oder dergleichen gebildet sein, die nicht zur Lösung vorgesehen ist. In diesem Fall braucht eine lösbare elektrische Verbindung nicht vorgesehen zu sein. Entsprechendes kann natürlich auch für den Fall vorgesehen sein, dass das Anschlussgerät im Fahrzeugscheinwerferanschluss des Fahrzeugs integriert ist.

Dieser Fall kann zum Beispiel auftreten, wenn herstellerseitig eine entsprechende Anpassung an unterschiedliche Scheinwerferkonstruktionen nachträglich berücksichtigt werden soll.

Der Bordnetzanschluss kann ebenfalls durch eine elektrische Steckverbindung gebildet sein. Darüber hinaus besteht natürlich die Möglichkeit, dass der Bordnetzanschluss durch ein vorgefertigtes elektrisches Kabel gebildet ist, was zum Beispiel an das Bordnetz im Bereich des Akkumulators unmittelbar angeschlossen werden kann, beispielsweise mittels geeigneter elektrischer Verbindungstechnik wie Klemmen, Krimpen, Schraubverbinden oder dergleichen.

Die Leuchtmittelsimulationseinheit sowie auch die Steuereinheit können als elektronische Hardwareschaltung ausgebildet sein. Sie können zumindest teilweise auch eine programmgesteuerte Rechnereinheit umfassen. Die Leuchtmittelsimulationseinheit umfasst vorzugsweise ferner einen getakteten Energiewandler, insbesondere einen DC/DC-Wandler, mittels dem am Fahrzeuganschluss eine vorgebbare Energieentnahme beziehungsweise Leistungsentnehme erreicht werden kann. Die entsprechend entnommene elektrische Energie beziehungsweise elektrische Leistung kann dann am Bordnetzanschluss wieder dem elektrischen Bordnetz des Fahrzeugs zugeführt werden. Dadurch braucht diese elektrische Energie beziehungsweise elektrische Leistung nicht in einem elektrischen Verbraucher, wie einem elektrischen Widerstand oder dergleichen, in Wärme umgewandelt zu werden, sondern sie kann der weiteren Nutzung im Bordnetz des Fahrzeugs zur Verfügung gestellt werden. Der getaktete Energiewandler ist zum Zwecke der Simulation vorzugsweise einstellbar ausgebildet. Entsprechend der erfassten elektrischen Größe kann er mittels einer Wandlersteuerung in geeigneter Weise gesteuert werden. Vorzugsweise weist die Leuchtmittelsimulationseinheit den getakteten Energiewandler zum Simulieren des Leuchtmittels auf.

Die Steuereinheit umfasst ferner ein elektronisches Stellmittel, mittels welchem dem Leuchtmittel entsprechend des Steuersignals elektrische Energie beziehungsweise elektrische Leistung zugeführt werden kann. Die Steuereinheit kann hierfür ebenfalls einen getakteten Energiewandler aufweisen, der vom Bordnetzanschluss elektrische Energie bezieht und diese in für das Leuchtmittel geeignete Weise umformt. Vorzugsweise ist der getaktete Energiewandler ebenfalls einstellbar ausgebildet und umfasst eine Wandlersteuerung, die mittels des Steuersignals steuerbar ist.

Das Steuersignal kann ebenso wie das Überwachungssignal ein analoges oder auch ein digitales Signal sein.

Gemäß einer vorteilhaften Weiterbildung wird vorgeschlagen, dass die Leuchtmittelsimulationseinheit eine erste Einstelleinheit zum Einstellen des Simulierens des vorgebbaren Leuchtmittels aufweist. Die erste Einstelleinheit kann zum Beispiel eine manuelle oder auch eine elektronische Einstelleinheit sein. Als manuelle Einstelleinheit kann zum Beispiel ein Stellknopf, ein Schalter und/oder dergleichen vorgesehen sein, mittels dem eine Einstellung der Leuchtmittelsimulationseinheit gemäß dem vorgebbaren Leuchtmittel vorgenommen werden kann. Diese Ausgestaltung eignet sich insbesondere für den Fall der Nachbeziehungsweise Umrüstung. Dem Grunde nach kann die erste Einstelleinheit natürlich auch für ein elektronisches Steuern vorgesehen sein. Zu diesem Zweck kann die erste Einstelleinheit einen Kommunikationsanschluss zum kommunikationstechnischen Koppeln eines Einstellgerätes aufweisen, beispielsweise ein mobiles Kommunikationsendgerät wie ein Smartphone, ein Laptop oder dergleichen.

Ferner wird vorgeschlagen, dass die Steuereinheit eine zweite Einstelleinheit zum Einstellen der Steuereinheit bezüglich eines bestimmungsgemäßen Betriebs des Leuchtmittels aufweist. Dadurch ist es möglich, die Steuereinheit an das tatsächlich im Fahrzeugscheinwerfer vorhandene Leuchtmittel auf einfache Weise anpassen zu können. Auch hier kann beispielsweise eine manuelle Einstellbarkeit mittels eines Drehknopfes, eines Schalters oder dergleichen vorgesehen sein. Darüber hinaus besteht auch hier die Möglichkeit, eine elektronische Einstellung bereitzustellen, die, ebenso wie bei der ersten Einstelleinheit, mittels eines Kommunikationsendgerätes durchgeführt werden kann. Natürlich kann auch eine Kombination bezüglich des Einstellens vorgesehen sein.

Die Erfindung ist jedoch nicht beschränkt darauf, dass der Fahrzeugscheinwerfer lediglich ein einziges Leuchtmittel aufweist und der Fahrzeugscheinwerferanschluss lediglich für das Anschließen eines einzigen Leuchtmittels ausgebildet ist. Es kann nämlich auch vorgesehen sein, dass der Fahrzeugscheinwerferanschluss dazu ausgebildet ist, an einen Fahrzeugscheinwerfer mit mehreren Leuchtmitteln angeschlossen zu werden. Für diesen Fall wird vorzugsweise vorgeschlagen, dass der Fahrzeuganschluss mehrere voneinander getrennte Leuchtmittelkanäle aufweist, die vorzugsweise entsprechend am Fahrzeugscheinwerferanschluss vorgesehenen Leuchtmittelkanälen entsprechen. Dementsprechend ist die Leuchtmittelsimulationseinheit ausgebildet, jeweilige elektrische Größen für jeden der Leuchtmittelkanäle am Fahrzeuganschluss zu erfassen und an den jeweiligen Leuchtmittelkanälen jeweilige vorgegebene Leuchtmittel unter Berücksichtigung der jeweiligen erfassten elektrischen Größen zu simulieren. So kann vorgesehen sein, dass der Fahrzeugscheinwerferanschluss zum Anschließen eines Fahrzeugscheinwerfers ausgebildet ist, der mit unterschiedlichen Leuchtmitteln eine Blinkerfunktion, eine Standlichtfunktion, eine Abblendlichtfunktion und eine Fernlichtfunktion bereitstellt. Entsprechend sind Leuchtmittelkanäle vorhanden, die den jeweiligen vorgebbaren Leuchtmitteln zugeordnet sein können. Mit der Erfindung kann erreicht werden, dass mehrere entsprechende vorgebbare Leuchtmittel, vorzugsweise unabhängig voneinander, simuliert werden können. Zugleich ermöglicht es die Erfindung, den Fahrzeugscheinwerfer und hier insbesondere sein Leuchtmittel beziehungsweise, wenn mehrere Leuchtmittel vorhanden sind, die mehreren Leuchtmittel in entsprechender Weise zu steuern.

Beispielsweise kann vorgesehen sein, dass für jedes vorgebbare Leuchtmittel ein entsprechendes Leuchtmittel im Fahrzeugscheinwerfer vorhanden ist. Die Steuerung erfolgt dann vorzugsweise entsprechend zugeordnet. Es kann aber auch vorgesehen sein, dass das Leuchtmittel des Scheinwerfers geeignet ist, zwei oder mehrere der Beleuchtungsfunktionen mit einem einzigen Leuchtmittel zu realisieren. In diesem Fall kann dann mittels der Steuereinheit eine entsprechende Steuerung des Leuchtmittels des Fahrzeugscheinwerfers realisiert sein, und zwar abhängig von nicht nur einer einzigen elektrischen Größe eines einzigen der Leuchtmittelkanäle, sondern einer entsprechenden Mehrzahl von elektrischen Größen der jeweiligen unterschiedlichen Leuchtmittelkanäle. Besonders vorteilhaft eignet sich diese Ausgestaltung für den Einsatz bei Pixelscheinwerfern, die beispielsweise mittels Matrizen von Leuchtdioden, einem Laserscanner oder dergleichen als Leuchtmittel ausgerüstet sind.

Bei mehr als einem Leuchtmittel des Fahrzeugscheinwerfers kann das Anschlussgerät für vorzugsweise jedes zu steuernde Leuchtmittel des Fahrzeugscheinwerfers einen eigenen mittels der Steuereinheit steuerbaren Leuchtmittelanschluss aufweisen. Dadurch können die Leuchtmittel auf einfache Weise unabhängig voneinander gesteuert werden.

Die Erfindung ermöglicht es darüber hinaus, auch hinsichtlich der elektrischen Eigenschaften gänzlich unterschiedliche Leuchtmittel in bestimmungsgemäßer Weise betreiben zu können. So ist es mit der Erfindung möglich, dass die Steuereinheit ausgebildet ist, als Leuchtmittel eine Gasentladungslampe im Fahrzeugscheinwerfer bestimmungsgemäß zu betreiben, auch wenn der Fahrzeugscheinwerferanschluss für den Betrieb einer Glühlampe ausgebildet ist. Bekanntermaßen sind insbesondere für den Start der Gasentladungslampe besondere elektrische Anforderungen zu erfüllen, die mittels eines unmittelbaren Anschließens an den Fahrzeugscheinwerferanschluss im vorgenannten Fall nicht realisiert werden könnten. Mit der Erfindung kann eine diesbezügliche Anpassung erreicht werden. So ist es möglich, dass die Steuereinheit eine entsprechende Zündspannung bereitstellt, mit der es möglich ist, die Gasentladungslampe zu zünden. Darüber hinaus kann die Steuereinheit vorzugsweise ausgebildet sein, die entsprechenden elektrischen Eigenschaften nach dem Zünden der Gasentladungslampe zu berücksichtigen.

Vorzugsweise wird vorgeschlagen, dass das Steuern des Leuchtmittels abhängig von dem ermittelten Steuersignal zumindest teilweise für eine vorgebbare Zeitdauer verzögert wird. Diese Ausgestaltung ermöglicht es, bestimmte Prüffunktionen, die den Betrieb des vorgebbaren Leuchtmittels nicht stören würden, jedoch beim Betrieb des Leuchtmittels des Fahrzeugscheinwerfers Störungen zur Folge haben könnten, auszublenden. Beispielsweise können hierdurch die für die Überwachung von Glühlampen üblicherweise vorgesehenen kurzen Prüfimpulse ausgeblendet werden. Bei einem Prüfimpuls handelt es sich um das kurzzeitige Anlegen einer Spannung, wobei diese in der Regel für weniger als 200ms anliegt. Zur Überprüfung kann ein einzelner Prüfimpuls abgegeben werden, oder es können auch mehrere Prüfimpulse hintereinander abgegebene werden, vorzugsweise in dem vorgenannten Zeitraum. Beispielsweise kann die Verzögerungszeit im Bereich von einigen Millisekunden bis zu beispielsweise etwa 0,5 Sekunden betragen. Vorzugsweise beträgt die Zeitdauer bis zu etwa 0,25 Sekunden, besonders bevorzugt bis zu etwa 0,2 Sekunden.

Es wird ferner vorgeschlagen, dass die erfasste elektrische Größe gefiltert wird. Diese Ausgestaltung ermöglicht es, je nach Art der elektrischen Größe eine zuverlässige Erfassung zum Steuern der Leuchtmittelsimulationseinheit sowie auch der Steuereinheit erreichen zu können. Vorteilhaft ist dies zum Beispiel, wenn eine Helligkeitssteuerung für das vorgebbare Leuchtmittel mittels eines Taktens wie Pulsweitenmodulation (PWM) vorgesehen ist. Bei einer solchen Steuerung kann es sich natürlich ergeben, dass die entsprechende Größe ungefiltert einen zuverlässigen Betrieb des Leuchtmittels des Fahrzeugscheinwerfers behindern könnte. Mittels des Filterns kann dies vermieden werden. Das Filtern kann zum Beispiel mittels eines zeitlichen Integrierens oder dergleichen erreicht werden. Entsprechend kann eine Tiefpassfunktion vorgesehen sein.

Vorzugsweise erfolgt das Simulieren des vorgegebenen Leuchtmittels mittels eines elektrischen Stroms. Dieser elektrische Strom wird am Fahrzeuganschluss des Anschlussgerätes bereitgestellt und wirkt somit auf den Fahrzeugscheinwerferanschluss im angeschlossenen Zustand ein. Dadurch wird die Fahrzeugsteuerung beziehungsweise die Überwachungseinrichtung des Fahrzeugs mit einem entsprechenden Strom beaufschlagt. Da üblicherweise das Bordnetz mit einer im Wesentlichen konstanten elektrischen Spannung betrieben wird, kann alternativ auch die elektrische Leistung herangezogen werden. Die Nutzung des elektrischen Stroms zum Simulieren des vorgegebenen Leuchtmittels ist deshalb eine besonders einfache Realisierung für die Erfindung. Besonders vorteilhaft eignet sich diese Weiterbildung in Kombination mit einer elektrischen Spannung als elektrischer Größe.

Darüber hinaus erweist es sich als vorteilhaft, wenn der elektrische Strom erfasst, mit einem vorzugsweise vorgegebenen Vergleichswert verglichen und der elektrische Strom abhängig von dem Vergleich eingestellt wird. Dadurch kann eine Regelung bereitgestellt werden, mittels der der elektrische Strom zuverlässig auf den gewünschten Wert, wie er dem vorgebbaren Leuchtmittel entsprechen würde, eingestellt werden kann. Der Vergleichswert stellt somit eine Soll-Größe bereit, die dem vorgebbaren Leuchtmittel zuordbar ist. Dadurch kann das Anschlussgerät auf einfache Weise an unterschiedlichste vorgebbare Leuchtmittel angepasst werden.

Es braucht lediglich der Vergleichswert entsprechend dem jeweiligen vorgebbaren Leuchtmittel, auf das die Überwachungseinrichtung des Fahrzeugs eingestellt ist, vorgegeben werden. Der elektrische Strom selbst kann dabei mittels eines Shunts oder auch kontaktlos mittels eines geeigneten Stromwandlers oder dergleichen erfasst werden. Entsprechend ist das Anschlussgerät, vorzugsweise die Leuchtmittelsimulationseinheit, mit einer Regelungseinheit ausgerüstet, mittels der die gewünschte Funktion realisiert werden kann.

Das Einstellen des Vergleichswerts kann ebenso wie das Einstellen der ersten und/oder der zweiten Einstelleinheit mittels eines externen Kommunikationsendgerätes erfolgen.

Die für das erfindungsgemäße Anschlussgerät angegebenen Wirkungen und Vorteile gelten gleichermaßen für den mit dem Anschlussgerät ausgerüsteten Fahrzeugscheinwerfer beziehungsweise das mit dem Anschlussgerät ausgerüstete Fahrzeug sowie das Verfahren der Erfindung und umgekehrt. Somit können für Vorrichtungsmerkmale auch Verfahrensmerkmale und umgekehrt angegeben sein.

Weitere Vorteile und Merkmale sind der folgenden Beschreibung von Ausführungsbeispielen anhand der beigefügten Figuren zu entnehmen. In den Figuren bezeichnen gleiche Bezugszeichen gleiche Merkmale und Funktionen.

Es zeigen:
- Fig. 1: in einer schematischen Blockdarstellung in einer oberen Darstellung ein Bordnetz eines nicht weiter dargestellten Fahrzeugs, welches vorliegend ein Kraftwagen ist, an dem ein Fahrzeugscheinwerfer mit einer Halogenlampe als Leuchtmittel angeschlossen ist und in einer unteren Darstellung das Bordnetz wie in der oberen Darstellung, wobei hier das Leuchtmittel des Fahrzeugscheinwerfers durch eine Leuchtdiode gebildet ist;
- Fig. 2: eine schematische Darstellung wie in der unteren Ansicht gemäß Fig. 1, wobei der Fahrzeugscheinwerfer mittels eines Anschlussgerätes der Erfindung angeschlossen ist;
- Fig. 3: eine schematische Blockdarstellung basierend auf der Schaltung gemäß Fig. 2;
- Fig. 4: eine weitere schematische Blockdarstellung für eine weitere Ausgestaltung gemäß der Erfindung, bei der der Fahrzeugscheinwerfer mehrere Leuchtmittel aufweist;
- Fig. 5: eine Darstellung wie Fig. 3, bei der das Anschlussgerät hinsichtlich der Simulation mittels eines Einstellelements auf eine erste Leistung eingestellt ist;
- Fig. 6: eine Darstellung wie Fig. 5, wobei das Einstellelement auf eine zweite Leistung eingestellt ist; und
- Fig. 7: eine weitere Ausgestaltung basierend auf der Ausgestaltung gemäß Fig. 4.

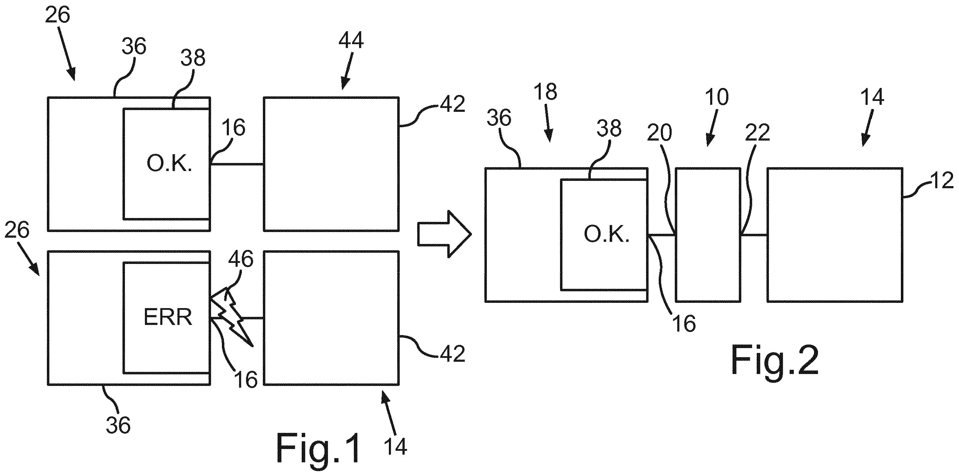

Fig. 1 zeigt in einer oberen Darstellung ein Bordnetz 26 eines nicht weiter dargestellten Kraftwagens als Fahrzeug. Das Bordnetz 26 umfasst eine fahrzeugseitige Steuereinrichtung 36, mittels der unter anderem wenigstens ein Fahrzeugscheinwerfer 44 steuerbar ist. Der Fahrzeugscheinwerfer 44 weist als Leuchtmittel eine Halogenlampe 42 auf.

Der Fahrzeugscheinwerfer 44 ist an einem Fahrzeugscheinwerferanschluss 16 des Fahrzeugs angeschlossen.

Der Fahrzeugscheinwerferanschluss 16 wird mittels einer an der Halogenlampe 42 angepassten Überwachungseinrichtung 38 hinsichtlich seiner bestimmungsgemäßen Funktion überwacht. Tritt eine Störung der Halogenlampe 42 auf, so kann dies mit der Überwachungseinrichtung 38 erkannt werden und die Überwachungseinrichtung 38 gibt eine entsprechende Störungsmeldung ab. Die Störungsmeldung wird dann zum Beispiel im Bereich eines Cockpits für den Fahrer des Fahrzeugs angezeigt.

Darüber hinaus ist die Überwachungseinrichtung 38 mit der Steuereinrichtung 36 gekoppelt und liefert das Meldesignal zugleich auch an die Steuereinrichtung 36. Sobald das Störungssignal der Überwachungseinrichtung 38 die Steuereinrichtung 36 erreicht, schaltet diese den Fahrzeugscheinwerfer 44 und/oder die betroffene mindestens eine Funktion des Fahrzeugscheinwerfers 44 entsprechend ab.

Die Überwachungseinrichtung 38 überwacht vorliegend einen elektrischen Strom, der über den Fahrzeugscheinwerferanschluss 16 an die Halogenlampe 42 aufgrund einer elektrischen Spannung am Fahrzeugscheinwerferanschluss 16 strömt, mittels eines nicht dargestellten Stromsensors.

In einer unteren Darstellung ist das Bordnetz 26 wie in der oberen Darstellung gezeigt und weist auch die gleichen Funktionen auf. Im Unterschied zur oberen Darstellung ist in der unteren Darstellung anstelle des Fahrzeugscheinwerfers 44 ein Fahrzeugscheinwerfer 14 angeschlossen, der ein leuchtdiodenbasiertes Leuchtmittel 12 aufweist.

Bekanntermaßen benötigt ein leuchtdiodenbasiertes Leuchtmittel einen erheblich geringeren Strom für eine vergleichbare Lichtleistung als die Halogenlampe 42. Infolgedessen wird bei Aktivierung des Fahrzeugscheinwerfers 14 ein erheblich geringerer Strom durch den Fahrzeugscheinwerferanschluss 16 strömen. Die Überwachungseinrichtung 38 stellt dies fest und erkennt dies als Störung. Entsprechend gibt die Überwachungseinrichtung 38 ihre Störungsmeldung nach Art eines Störungssignals ab. Die Steuereinrichtung 36 schaltet sodann den Fahrzeugscheinwerfer 14 und/oder die betroffene mindestens eine Funktion des Fahrzeugscheinwerfers 44 vollständig ab. Die Störung ist in der unteren Darstellung mit dem Symbol 46 gezeigt.

Obwohl der Fahrzeugscheinwerfer 14 voll funktionstüchtig ist, wird dies von der Überwachungseinrichtung 38 nicht erkannt und stattdessen vielmehr eine Störung festgestellt, obwohl tatsächlich keine Störung vorliegt.

Dem Grunde nach bestünde jetzt die Möglichkeit, die Überwachungseinrichtung 38 entsprechend dem Leuchtmittel 12 anzupassen. Dies erforderte jedoch einen Eingriff in die fahrzeugseitige Überwachungseinrichtung 38 beziehungsweise die Steuereinrichtung 36. Vielfach ist ein derartiger Eingriff nicht möglich oder führt zumindest zu weiteren Störungen des bestimmungsgemäßen Betriebs des Fahrzeugs. Infolgedessen kommt ein Eingriff in die Überwachungseinrichtung 38 sowie auch die Steuereinrichtung 36 des Fahrzeugs in der Regel nicht in Betracht.

Fig. 2 zeigt nun eine Lösung für das Problem, welches anhand der unteren Darstellung in Fig. 2 erläutert wurde. Zu erkennen ist aus der schematischen Blockdarstellung gemäß Fig. 2, dass zwischen dem Fahrzeugscheinwerferanschluss 16 und dem Fahrzeugscheinwerfer 14 ein Anschlussgerät 10 gemäß der Erfindung angeschlossen ist. Mit dem Anschlussgerät 10 kann eine entsprechende Anpassung vorgenommen werden, sodass aus Sicht der Überwachungseinrichtung 38 eine Funktionalität einer Halogenlampe 42 als vorgebbares Leuchtmittel simuliert wird, obwohl tatsächlich der Fahrzeugscheinwerfer 14 mit dem leuchtdiodenbasierten Leuchtmittel 12 angeschlossen ist. Dadurch kann die vorbeschriebene Störung, die mit dem Symbol 46 dargestellt ist, vermieden werden. Das Anschlussgerät 10 ermöglicht es somit, ohne Eingriff in die Überwachungseinrichtung 38 beziehungsweise die Steuereinrichtung 36 des Fahrzeugs einen bestimmungsgemäßen Betrieb des Fahrzeugscheinwerfers 14 am Fahrzeugscheinwerferanschluss 16 zu ermöglichen.

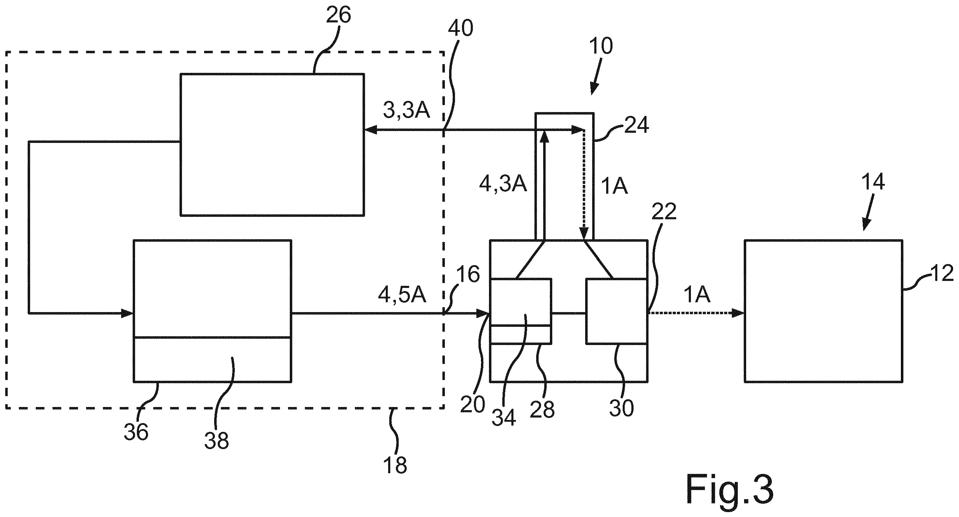

Fig. 3 zeigt in einer schematisch detaillierten Blockdarstellung basierend auf Fig. 2 die Funktionalität, die mit dem Anschlussgerät 10 der Erfindung bereitgestellt wird, damit der bestimmungsgemäße Betrieb des Fahrzeugscheinwerfers 14 am Fahrzeugscheinwerferanschluss 16 in Verbindung mit der Überwachungseinrichtung 38 ermöglicht ist.

Aus Fig. 3 ist ersichtlich, dass das Fahrzeug, welches hier mit dem Bezugszeichen 18 gekennzeichnet ist, das Bordnetz 26 sowie die Steuereinrichtung 36 mit der Überwachungseinrichtung 38 umfasst. Darüber hinaus umfasst das Fahrzeug 18 den Fahrzeugscheinwerferanschluss 16. Ferner umfasst das Fahrzeug 18 einen Fahrzeugbordnetzanschluss 40, der an das Bordnetz 26 elektrisch angeschlossen ist. Das Bordnetz 26 umfasst eine nicht weiter dargestellte Batterie nach Art eines Akkumulators, mittels der eine nicht weiter bezeichnete Bordnetzgleichspannung bereitgestellt wird.

Aus Fig. 3 ist ersichtlich, dass das Anschlussgerät 10 einen Fahrzeuganschluss 20 zum Anschließen am Fahrzeugscheinwerferanschluss 16 des Fahrzeugs 18 sowie einen Leuchtmittelanschluss 22 zum elektrischen Koppeln des Leuchtmittels 12 des Fahrzeugscheinwerfers 14 aufweist. Das Leuchtmittel 12 ist hier das leuchtdiodenbasierte Leuchtmittel 12. Ferner umfasst das Anschlussgerät 10 einen Bordnetzanschluss 24 zum Anschließen an das elektrische Bordnetz des Fahrzeugs 18, und zwar hier an den Fahrzeugbordnetzanschluss 40.

Das Anschlussgerät 10 umfasst ferner eine am Fahrzeuganschluss 20 und am Bordnetzanschluss 24 angeschlossene Leuchtmittelsimulationseinheit 28 zum Erfassen der elektrischen Spannung als elektrischer Größe und zum Simulieren eines vorgebbaren Leuchtmittels, hier der Halogenlampe 42, unter Berücksichtigung der erfassten elektrischen Spannung am Fahrzeuganschluss 20. Die elektrische Spannung am Fahrzeuganschluss 20 entspricht der elektrischen Spannung, die von der Steuereinrichtung 36 beziehungsweise der Überwachungseinrichtung 38 am Fahrzeugscheinwerferanschluss 16 bereitgestellt wird.

Die Leuchtmittelsimulationseinheit 28 ist vorliegend ausgebildet, aufgrund der erfassten elektrischen Spannung am Fahrzeuganschluss 20 des Anschlussgerätes 10 einen entsprechenden Stromfluss durch den Fahrzeuganschluss 20 und somit infolgedessen auch durch den Fahrzeugscheinwerferanschluss 16 zu bewirken. Wird also mittels der Steuereinrichtung 36 der Fahrzeugscheinwerfer 14 eingeschaltet, wird dies durch Erfassen der entsprechenden elektrischen Spannung am Fahrzeuganschluss 20 mittels eines Spannungssensors ermittelt und ein entsprechender Stromfluss mittels der Leuchtmittelsimulationseinheit 28 bewirkt.

In Fig. 3 ist der Strom an dem entsprechenden Anschluss mit 4,5 A angegeben. Obwohl keine Halogenlampe wie die Halogenlampe 42 in der Schaltung gemäß Fig. 3 vorhanden ist, wird ein entsprechender Stromfluss am Fahrzeugscheinwerferanschluss 16 bewirkt, sodass die Überwachungseinrichtung 38 eine funktionstüchtige Halogenlampe 42 erkennt. Damit ist fahrzeugseitig die bestimmungsgemäße Funktion erhalten.

Der mittels der Leuchtmittelsimulationseinheit 28 bewirkte Stromfluss am Fahrzeuganschluss 20 und somit auch am Fahrzeugscheinwerferanschluss 16 erfordert, dass der Stromkreis geschlossen wird. Zu diesem Zweck ist die Leuchtmittelsimulationseinheit 28 an dem Bordnetzanschluss 24 angeschlossen. Über den Bordnetzanschluss 24 kann somit der am Fahrzeuganschluss 20 vorliegende Strom in das Bordnetz 26 zurückgeführt werden, und zwar über den Bordnetzanschluss 24 und den Fahrzeugbordnetzanschluss 40.

Um nunmehr den Fahrzeugscheinwerfer 14 in entsprechend bestimmungsgemäßer Weise betreiben zu können, weist das Anschlussgerät 10 der Erfindung eine Steuereinheit 30 auf, die am Leuchtmittelanschluss 22 und am Bordnetzanschluss 24 angeschlossen ist. Zugleich steht die Steuereinheit 30 kommunikationstechnisch mit der Leuchtmittelsimulationseinheit 28 in Verbindung. Somit steht bei der Steuereinheit 30 als erfasste elektrische Größe die elektrische Spannung, die am Fahrzeugscheinwerferanschluss 16 beziehungsweise am Fahrzeuganschluss 20 erfasst worden ist, zur Verfügung. Abhängig von der erfassten elektrischen Spannung wird mittels der Steuereinheit 30 ein Steuersignal ermittelt, welches zum Steuern des leuchtdiodenbasierten Leuchtmittels 12 abhängig von dem ermittelten Steuersignal dient. Mit dem Anschlussgerät 10 ist es somit möglich, nicht nur fahrzeugseitig die Halogenlampe 42 zu simulieren, sondern entsprechend das leuchtdiodenbasierte Leuchtmittel 12 des Fahrzeugscheinwerfers 14 zu steuern. Das Anschlussgerät 10 ist somit zwischengeschaltet zwischen dem Fahrzeugscheinwerferanschluss 16 und dem Fahrzeugscheinwerfer 14, sodass es eine Adaption bewirkt.

Damit die Steuereinrichtung 36 das leuchtdiodenbasierte Leuchtmittel 12 in bestimmungsgemäßer Weise betreiben kann, ist es am Bordnetzanschluss 24 ebenfalls angeschlossen. Dadurch kann die Steuereinheit 30 elektrische Energie aus dem Bordnetz 26 beziehen, um den Fahrzeugscheinwerfer 14 beziehungsweise dessen leuchtdiodenbasiertes Leuchtmittel 12 in bestimmungsgemäßer Weise betreiben zu können.

Dadurch, dass die Leuchtmittelsimulationseinheit 28 und die Steuereinheit 30 beide zusammen am Bordnetzanschluss 24 angeschlossen sind, kann natürlich auch ein Teil des von der Leuchtmittelsimulationseinheit 28 bereitgestellten Stromes am Bordnetzanschluss 24 von der Steuereinheit 30 dazu genutzt werden, den Fahrzeugscheinwerfer 14 beziehungsweise dessen leuchtdiodenbasierten Leuchtmittel 12 zu betreiben. In Fig. 3 sind entsprechende Stromangaben angegeben, die sich auf den Ersatz einer Halogenlampe mit einer Leistung von etwa 55 W sowie einem leuchtdiodenbasierten Leuchtmittel mit einer Leistung von etwa 12 W beziehen. Bei einer erfassten elektrischen Spannung von etwa 12 V ergeben sich die in Fig. 3 angegebenen Stromstärken und Leistungen.

Aus Fig. 3 ist ersichtlich, dass am Fahrzeugscheinwerferanschluss 16 beziehungsweise am Fahrzeuganschluss 20 ein Strom von 4,5 A strömt. Die Leuchtmittelsimulationseinheit 28 liefert am Bordnetzanschluss 24 einen Strom von 4,3 A. Die Differenz wird benötigt, um die Leuchtmittelsimulationseinheit 28 sowie gegebenenfalls weitere Einheiten des Anschlussgerätes 10, insbesondere die Steuereinheit 30, entsprechend mit elektrischer Energie für ihren bestimmungsgemäßen Betrieb versorgen zu können. Entsprechend wird vom Bordnetz 26 mittels der Steuereinheit 30 ein Strom von etwa 1 A gezogen, der im Wesentlichen auch dem leuchtdiodenbasierten Leuchtmittel 12 zur Verfügung gestellt wird. Die Überlagerung der beiden Ströme am Bordnetzanschluss 24 führt dazu, dass vom Bordnetzanschluss 24 zum Fahrzeugbordnetzanschluss 40 lediglich ein Strom von 3,3 A strömt.

Aus den vorgenannten Strömen ergibt sich, dass das Anschlussgerät 10 den Fahrzeugscheinwerfer 14 mit einem Wirkungsgrad von etwa 95% an den Fahrzeugscheinwerferanschluss 16 ankoppeln kann.

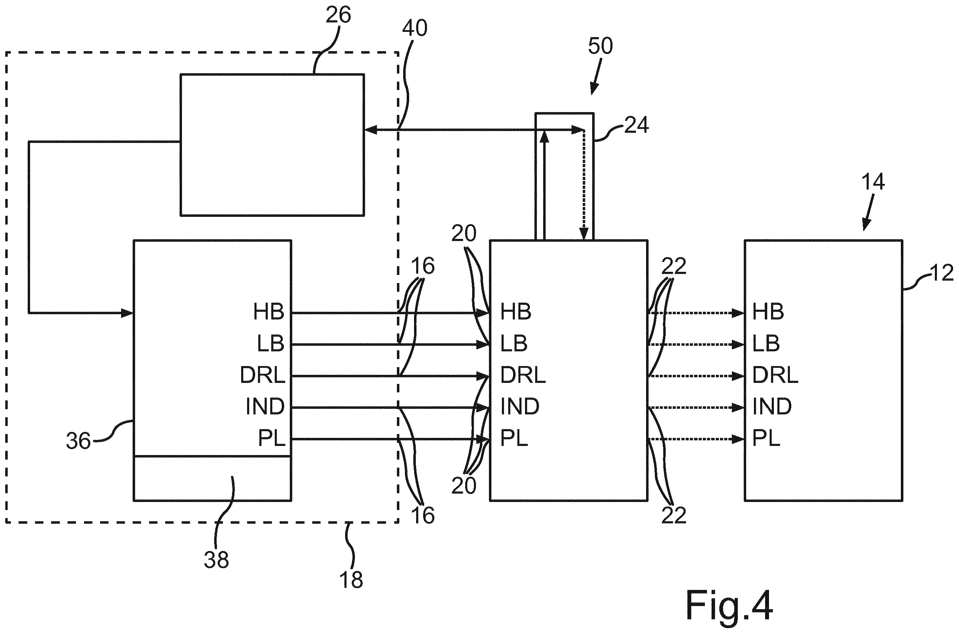

Fig. 4 zeigt eine weitere Ausgestaltung gemäß der Erfindung, die auf der Ausgestaltung gemäß Fig. 3 basiert. Im Unterschied zur Fig. 3 ist bei der Ausgestaltung gemäß Fig. 4 vorgesehen, dass der Fahrzeugscheinwerfer 14 hier fünf leuchtdiodenbasierte Leuchtmittel 12 aufweist. Diese sind in Fig. 4 mit HB (high beam) für Fernlicht, LB (low beam) für Abblendlicht, DRL (day time running light) für Tagfahrlicht, IND (indicator) für Blinklicht sowie PL (position light) für Standlicht gekennzeichnet. Entsprechend ist hier das Anschlussgerät 10 gemäß Fig. 3 durch ein Anschlussgerät 50 gemäß Fig. 4 ersetzt. Für jedes der vorgenannten Leuchtmittel ist ein eigener unabhängiger Leuchtmittelkanal vorgesehen, der einen jeweiligen Fahrzeugscheinwerferanschluss sowie einen jeweiligen Fahrzeuganschluss am Anschlussgerät 50 bereitstellt, die in entsprechender Weise miteinander elektrisch gekoppelt sind. Fahrzeugseitig ist die Steuereinrichtung 36 zum Steuern dieser Leuchtmittel in Form von Glühlampen ausgebildet. Mittels der Überwachungseinrichtung 38 werden sämtliche Leuchtmittelkanäle in entsprechender Weise überwacht.

Um die bestimmungsgemäße Funktion auch in diesem Fall realisieren zu können, weist das Anschlussgerät 50 für jeden der Leuchtmittelkanäle eine jeweilige Leuchtmittelsimulationseinheit auf, die dem jeweiligen Leuchtmittelkanal individuell zugeordnet ist. Dadurch kann die jeweilige Stromstärke am jeweiligen Fahrzeugscheinwerferanschluss 16 bereitgestellt werden. Die bereitgestellten Ströme werden über den Bordnetzanschluss 24 sowie den Fahrzeugbordnetzanschluss 40 an das Bordnetz 26 zurückgefördert. Die Steuereinheit 30 ist bei dem Anschlussgerät 50 entsprechend zum Steuern der fünf Leuchtmittelkanäle des Fahrzeugscheinwerfers 14 ausgebildet. Entsprechend werden individuell steuerbare Leuchtmittelkanäle bereitgestellt, an die die jeweils zugeordneten leuchtdiodenbasierten Leuchtmittel des Fahrzeugscheinwerfers 14 angeschlossen sind. Die Funktionalität ist für jeden dieser Kanäle entsprechend der, wie sie bereits anhand des Ausführungsbeispiels zur Fig. 3 erläutert worden ist, weshalb ergänzend auf die diesbezüglichen Ausführungen verwiesen wird.

Dem Grunde nach besteht natürlich auch die Möglichkeit, dass der Fahrzeugscheinwerfer 14 lediglich einige der Leuchtmittel als leuchtdiodenbasierte Leuchtmittel, beispielsweise in anorganischer oder organischer Bauweise, und andere der Leuchtmittel wiederum als Glühlampen beziehungsweise Halogenlampen beziehungsweise Entladungslampen aufweist. In diesem Fall ist das Anschlussgerät 50 entsprechend anzupassen. Es kann sogar vorgesehen sein, dass für diese Ausgestaltung eine entsprechende Leuchtmittelsimulationseinheit und eine entsprechende Steuereinheit nicht vorgesehen sind, sondern stattdessen der jeweilige Leuchtmittelkanal einfach durch das Anschlussgerät durchgeschleift ist.

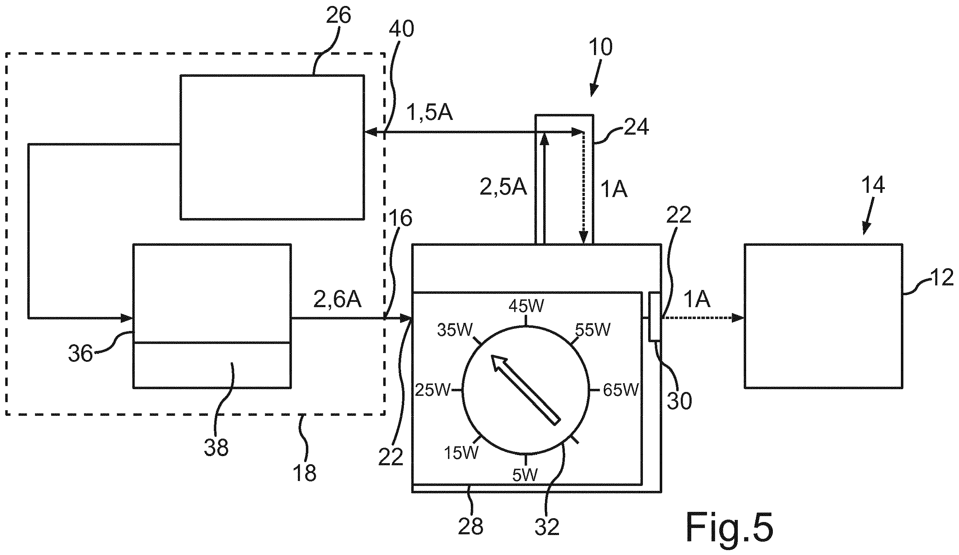

Aus Fig. 3 ist ferner ersichtlich, dass die Leuchtmittelsimulationseinheit 28 einen getakteten Energiewandler 34 aufweist, mittels dem der gewünschte Stromfluss am Fahrzeuganschluss 20 beziehungsweise am Fahrzeugscheinwerferanschluss 16 zum Zwecke der Simulation realisiert werden kann. Der getaktete Energiewandler 34 ist vorliegend als DC/DC-Wandler ausgebildet. Seine Förderleistung kann mittels eines geeigneten Einstellelements in bedarfsgerechter Weise eingestellt werden, sodass das vorgebbare Leuchtmittel mittels der Leuchtmittelsimulationseinheit 28 in gewünschter Weise simuliert werden kann. Eine entsprechende Einstellmöglichkeit ist anhand der Fig. 5 dargestellt.

Fig. 5 zeigt in schematischer Darstellung eine Blockdarstellung wie Fig. 3, bei der jedoch die Leuchtmittelsimulationseinheit 28 ein Einstellelement 32 als erste Einstelleinheit nach Art eines Drehknopfes aufweist, mittels dem die mittels des getakteten Energiewandlers 34 gewandelte Leistung eingestellt werden kann. In der in Fig. 5 dargestellten Einstellung ist der getaktete Energiewandler 34 zum Wandeln einer Leistung von 35 W eingestellt. Es stellen sich die in der Fig. 5 dargestellten Stromstärken ein. Die Einstellung mittels des Einstellelements 32, welches die erste Einstelleinheit bereitstellt, ist anhand des vorgebbaren Leuchtmittels gewählt. Das vorgebbare Leuchtmittel ist das Leuchtmittel, auf welches die Überwachungseinrichtung 38 des Fahrzeugs eingestellt ist. In der vorliegenden Ausgestaltung gemäß Fig. 5 ist dies eine Halogenlampe mit einer Leistung von 35 W. Entsprechend wird die Leistung des getakteten Energiewandlers 34 mittels des Einstellelements 32 ebenfalls auf 35 W eingestellt. Dadurch sind eine zuverlässige Simulation und damit ein zuverlässiger Betrieb gewährleistet.

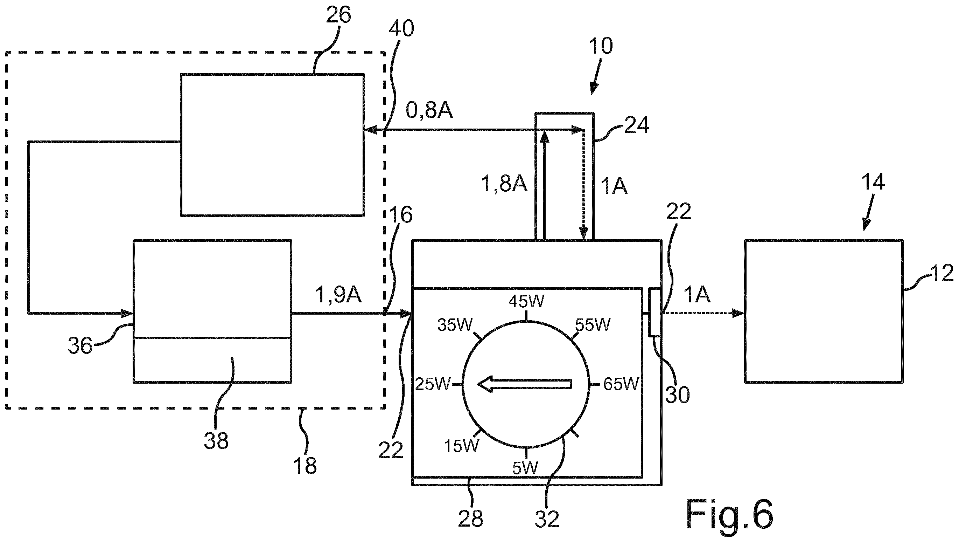

Fig. 6 zeigt eine weitere Ausgestaltung basierend auf der Ausgestaltung gemäß Fig. 5, weshalb ergänzend auf die diesbezüglichen Ausführungen verwiesen wird. Fig. 6 zeigt den Vorteil des Einstellelements 32, mittels dem das Anschlussgerät 10 auch an eine andere erforderliche Simulation beziehungsweise an ein anderes vorgebbares Leuchtmittel auf einfache Weise angepasst werden kann. In der Ausgestaltung gemäß Fig. 6 ist vorgesehen, dass die Überwachungseinrichtung 38 für eine Halogenlampe mit einer Leistung von 25 W ausgebildet ist. Entsprechend wird, damit eine geeignete Simulation durch das Anschlussgerät 10 bereitgestellt werden kann, mit dem Einstellelement 32 die Leistung des getakteten Energiewandlers 34 auf 25 W eingestellt. Damit kann unabhängig vom Fahrzeugscheinwerfer 14 über nahezu den gesamten Einstellbereich, der mit dem getakteten Energiewandler 34 möglich ist, eine zuverlässige Anpassung der Simulation an die Überwachungseinrichtung 38 erreicht werden.

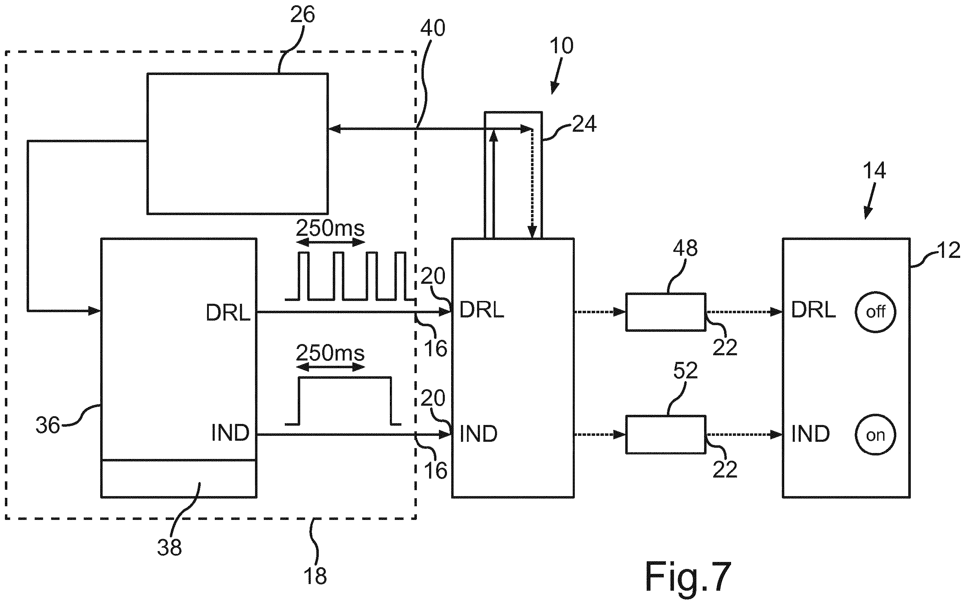

Fig. 7 zeigt eine weitere Ausgestaltung basierend auf der Ausgestaltung gemäß Fig. 4, weshalb ergänzend auf die diesbezüglichen Ausführungen verwiesen wird. In Fig. 7 sind als Beispiel zwei der leuchtdiodenbasierten Leuchtmittel 12 ausgewählt, und zwar das DRL und das IND. Fahrzeugseitig ist die Steuereinrichtung 36 ausgebildet, die Funktion der Leuchtmittel 12 mittels eines Prüfimpulses zu testen. Prüfimpulse haben in der Regel eine Dauer von weniger als 200ms. Traditionelle Lichtquellen wie Halogenlampen reagieren auf diese kurzen Prüfimpulse nicht, LED's hingegen würden kurz aufblitzen. Das Anschlussgerät weist Verzögerungseinheiten 48, 52 auf, die dazu führen, dass anliegende Signale, die kürzer als eine bestimmte Dauer anliegen, in diesem Beispiel etwa 250ms, ignoriert werden, weil diese als Prüfimpulse identifiziert werden. Erst, wenn Signale länger als diese Mindestzeit anliegen, wird die entsprechende Beleuchtung eingeschaltet. In diesem Fall führt dies dazu, dass das DRL nicht aktiviert wird, IND hingehen schon.

Auch wenn in den vorangehend diskutierten Ausführungsbeispielen die Leistung des Leuchtmittels 12 geringer war als die Leistung des vorgebbaren Leuchtmittels, auf das die Überwachungseinrichtung 38 eingestellt ist, kann dies natürlich auch umgekehrt sein. Entsprechend wird dann zusätzliche Energie aus dem Bordnetz 26 über den Fahrzeugbordnetzanschluss 40 und den Bordnetzanschluss 24 des Anschlussgeräts gezogen.

Die Ausführungsbeispiele dienen lediglich der Erläuterung der Erfindung und sollen diese nicht beschränken.

### BEZUGSZEICHENLISTE

- 10: Anschlussgerät
- 12: Leuchtmittel
- 14: Fahrzeugscheinwerfer
- 16: Fahrzeugscheinwerferanschluss
- 18: Fahrzeug
- 20: Fahrzeuganschluss
- 22: Leuchtmittelanschluss
- 24: Bordnetzanschluss
- 26: Bordnetz
- 28: Leuchtmittelsimulationseinheit
- 30: Steuereinheit
- 32: Einstellelement
- 34: Energiewandler
- 36: Steuereinrichtung
- 38: Überwachungseinrichtung
- 40: Fahrzeugbordnetzanschluss
- 42: Halogenlampe
- 44: Fahrzeugscheinwerfer
- 46: Symbol
- 48: Verzögerungseinheit
- 50: Anschlussgerät
- 52: Verzögerungseinheit

## Patentansprüche

1. Anschlussgerät (10) zum elektrischen Steuern von wenigstens einem Leuchtmittel (12) eines Fahrzeugscheinwerfers (14) abhängig von einer an einem Fahrzeugscheinwerferanschluss (16) eines Fahrzeugs (18) bereitstellbaren elektrischen Größe, mit:
- einem Fahrzeuganschluss (20) zum Anschließen am Fahrzeugscheinwerferanschluss (16) des Fahrzeugs (18),
- einem Leuchtmittelanschluss (22) zum elektrischen Koppeln des wenigstens einen Leuchtmittels (12) des Fahrzeugscheinwerfers (14),
- einem Bordnetzanschluss (24) zum Anschließen an ein elektrisches Bordnetz (26) des Fahrzeugs (18),
- einer am Fahrzeuganschluss (20) und am Bordnetzanschluss (24) angeschlossenen Leuchtmittelsimulationseinheit (28) zum Erfassen der elektrischen Größe und zum Simulieren eines vorgebbaren Leuchtmittels unter Berücksichtigung der erfassten elektrischen Größe am Fahrzeuganschluss (20), und
- einer am Leuchtmittelanschluss (22) und am Bordnetzanschluss (24) angeschlossenen Steuereinheit (30) zum Ermitteln eines Steuersignals abhängig von der erfassten elektrischen Größe und zum Steuern des Leuchtmittels (12) abhängig von dem ermittelten Steuersignal.

2. Anschlussgerät nach Anspruch 1,
**dadurch gekennzeichnet, dass**
die Leuchtmittelsimulationseinheit (28) eine erste Einstelleinheit (32) zum Einstellen des Simulierens des vorgebbaren Leuchtmittels aufweist.

3. Anschlussgerät nach Anspruch 1 oder 2,
**dadurch gekennzeichnet, dass**
die Leuchtmittelsimulationseinheit (28) einen getakteten Energiewandler (34) zum Simulieren des vorgebbaren Leuchtmittels aufweist.

4. Anschlussgerät nach einem der vorhergehenden Ansprüche,
**dadurch gekennzeichnet, dass**
die Steuereinheit (30) eine zweite Einstelleinheit zum Einstellen der Steuereinheit (30) bezüglich eines bestimmungsgemäßen Betriebs des Leuchtmittels (12) aufweist.

5. Anschlussgerät nach einem der vorhergehenden Ansprüche,
**dadurch gekennzeichnet, dass**
bei mehr als einem Leuchtmittel (12) des Fahrzeugscheinwerfers (14) das Anschlussgerät (10) für vorzugsweise jedes zu steuernde Leuchtmittel (12) des Fahrzeugscheinwerfers (14) einen eigenen mittels der Steuereinheit (30) steuerbaren Leuchtmittelanschluss (22) aufweist.

6. Anschlussgerät nach einem der vorhergehenden Ansprüche,
**dadurch gekennzeichnet, dass**
der Fahrzeuganschluss (22) mehrere voneinander getrennte Leuchtmittelkanäle aufweist und die Leuchtmittelsimulationseinheit (28) ausgebildet ist, jeweilige elektrische Größen für jeden der Leuchtmittelkanäle am Fahrzeuganschluss (22) zu erfassen und an den jeweiligen Leuchtmittelkanälen jeweilige vorgebbare Leuchtmittel unter Berücksichtigung der jeweiligen erfassten elektrischen Größen zu simulieren.

7. Fahrzeugscheinwerfer (14) zum Anschließen an einen Fahrzeugscheinwerferanschluss (16) eines Fahrzeugs (18), mit wenigstens einem Leuchtmittel (12),
**gekennzeichnet durch**
ein Anschlussgerät (10) nach einem der vorhergehenden Ansprüche.

8. Fahrzeug (18) mit einem an einem Fahrzeugscheinwerferanschluss (16) des Fahrzeugs (18) angeschlossenen Fahrzeugscheinwerfer (14) und einem Bordnetz (26),
**dadurch gekennzeichnet, dass**
der Fahrzeugscheinwerfer (14) mittels eines Anschlussgerätes (10) nach einem der Ansprüche 1 bis 6 angeschlossen oder der Fahrzeugscheinwerfer (14) nach Anspruch 7 ausgebildet ist.

9. Verfahren zum elektrischen Steuern von wenigstens einem Leuchtmittel (12) eines Fahrzeugscheinwerfers (14) mittels eines mit einem Bordnetz (26) eines Fahrzeugs (18) elektrisch gekoppelten Anschlussgerätes (10), bei dem das wenigstens eine Leuchtmittel (12) abhängig von einer an einem Fahrzeugscheinwerferanschluss (16) des Fahrzeugs (18) bereitgestellten elektrischen Größe gesteuert wird, wobei
- die elektrische Größe erfasst und ein vorgegebenes Leuchtmittel unter Berücksichtigung der erfassten elektrischen Größe am Fahrzeugscheinwerferanschluss (16) simuliert wird, und
- ein Steuersignal abhängig von der erfassten elektrischen Größe ermittelt und das wenigstens eine Leuchtmittel (12) abhängig von dem ermittelten Steuersignal gesteuert wird.

10. Verfahren nach Anspruch 9,
**dadurch gekennzeichnet, dass**
das Steuern des Leuchtmittels (12) abhängig von dem ermittelten Steuersignal zumindest teilweise für eine vorgebbare Zeitdauer verzögert wird.

11. Verfahren nach Anspruch 9 oder 10,
**dadurch gekennzeichnet, dass**
die erfasste elektrische Größe gefiltert wird.

12. Verfahren nach einem der Ansprüche 9 bis 11,
**dadurch gekennzeichnet, dass**
das Simulieren des vorgegebenen Leuchtmittels mittels eines elektrischen Stromes erfolgt.

13. Verfahren nach Anspruch 12,
**dadurch gekennzeichnet, dass**
der elektrische Strom erfasst, mit einem Vergleichswert verglichen und der elektrische Strom abhängig von dem Vergleich eingestellt wird.

14. Verfahren nach Anspruch 13,
**dadurch gekennzeichnet, dass**
das der Vergleichswert eingestellt wird.
